# EUROPÄISCHE PATENTSCHRIFT

(11) **EP 3 703 897 B1**
(45) Veröffentlichungstag und Bekanntmachung des Hinweises auf die Patenterteilung: **12.05.2021**
(21) Anmeldenummer: 18782383.6
(22) Anmeldetag: 01.10.2018
(51) Int. Cl.: B23K 20/12, B23K 20/16, B21B 15/00

(54) **VERFAHREN UND VORRICHTUNG ZUM VERBINDEN VON WARMBRAMMEN MITTELS REIBSCHWEISSEN**
METHOD AND DEVICE FOR CONNECTING HOT SLABS BY MEANS OF FRICTION WELDING
PROCEDE ET DISPOSITIF DE CONNEXION DES DALLES CHAUDES PAR SOUDAGE PAR FRICTION

(30) Priorität: 30.10.2017 DE 102017219416
(43) Veröffentlichungstag der Anmeldung: 09.09.2020
(73) Patentinhaber: SMS Group GmbH, 40237 Düsseldorf (DE)
(72) Erfinder: SCHELLMANN, Markus, 57080 Siegen (DE)
(74) Vertreter: Kross, Ulrich
(86) Internationale Anmeldenummer: PCT/EP2018/076605
(87) Internationale Veröffentlichungsnummer: WO 2019/086183

(56) Entgegenhaltungen:
- EP-A1- 1 459 833
- EP-A1- 1 459 833
- WO-A1-2017/140886
- WO-A1-2017/140886
- JP-A- H0 810 803
- JP-A- H0 810 803
- US-A1- 2004 112 941
- US-A1- 2004 112 941

## Beschreibung

Die Erfindung betrifft ein Verfahren und eine Vorrichtung zum Verbinden von aufeinanderfolgend wenigstens einem Walzgerüst zuführbaren Warmbrammen (siehe, z.B., WO2017/140886 A1).

Es ist bekannt, Warmbrammen miteinander zu verbinden, um beispielsweise ein kontinuierliches Warmwalzen von aufeinanderfolgenden Warmbrammen zu ermöglichen, ohne dass der Walzprozess zum Einfädeln bzw. Ausfädeln der jeweiligen Warmbramme in ein Walzgerüst bzw. eine Walzstraße unterbrochen werden muss. Durch den Entfall des Einfädelns lassen sich dünnere Enddicken erreichen. Darüber hinaus verringert sich die Gefahr des Auftretens sogenannter Hochgeher sowie des Verlaufens des Walzguts. Da also kein Einfädeln bzw. Ausfädeln von Warmbrammen erforderlich ist, wird auch der mit dem Einfädeln bzw. Ausfädeln üblicherweise verbundene Ausschuss reduziert, der durch das Abtrennen von Endabschnitten von Warmbrammen erzeugt wird, die zu Walzbeginn noch nicht bzw. am Walzende nicht mehr auf die gewünschte Dicke reduziert worden sind. Letztendlich ermöglicht das Verbinden von Warmbrammen eine Erhöhung der Produktivität eines Walzgerüsts bzw. einer Walzstraße bzw. einer entsprechend ausgestatteten metallurgischen Anlage.

EP 0 492 368 A2 betrifft eine Vorrichtung zum Stumpfstoßverbinden von sich auf einer Fördervorrichtung bewegenden Stahlblechen mittels Lichtbogenschweißen oder Induktionsheizen. JP 2014 050 852 A betrifft das Verschweißen von Brammen unter Verwendung eines Schweißzusatzwerkstoffs und einer elektrischen Schweißeinrichtung.

EP 3 064 307 A1 betrifft ein System, das einen zweiseitigen Adapter aus einer Legierung auf Ni-Basis aufweist, der an jeder der beiden Seiten mit verschiedenen Stahlsorten verbunden ist. Die Verbindung der verschiedenen Stahlsorten mit dem Adapter wird zumindest teilweise durch Reibschweißen erzeugt.

EP 2 474 382 A1, JP H11 342 481 A, JP 2008 036 648 A und WO 2009/117246 A1 betreffen jeweils eine Rührreibverbindungstechnik zum Verbinden von Metallprodukten.

JP 03 129 042 B2 betrifft ein Verfahren zum Verbinden von Warmbrammen, bei dem einander zugewandte Verbindungsseiten der Warmbrammen durch Reibschweißen unmittelbar miteinander verbunden werden.

Beim unmittelbaren Verbinden von Warmbrammen mittels Reibschweißen sind die zu bewegenden Massen in der Regel beträchtlich. Daher müssen entsprechend hohe Kräfte aufgebracht werden, um das Reibschweißen überhaupt durchführen zu können. Zudem müssen die Reaktionskräfte der aufgebrachten Kräfte konstruktiv abgefangen werden. Zur Sicherstellung der Dauerfestigkeit einer zum Reibschweißen verwendeten Vorrichtung müssen deren Komponenten relativ groß und robust ausgeführt werden, was mit einem erheblichen Aufwand und Raumbedarf verbunden ist. Zudem sind der Energiebedarf einer entsprechenden Vorrichtung und der prozesstechnische Aufwand relativ hoch. Dies macht die Wirtschaftlichkeit eines unmittelbaren Reibschweißverbindungsverfahrens fraglich. Des Weiteren sind die Bewegungen der Warmbrammen nicht geradlinig, sondern prinzipbedingt kreisförmig um einen Punkt schwingend. Der Abstand der Verbindungsseiten der Warmbrammen voneinander ist dabei nicht über den gesamten Schweißbereich bzw. die Breite der Warmbrammen gleichmäßig und variiert meist zyklisch während des Reibschweißens. Aus diesen Gründen kann das Schweißergebnis eines unmittelbaren Reibschweißverbindungsverfahrens als nicht ideal angesehen werden.

JP H08 10803 A offenbart ein Verfahren zum Verbinden von aufeinanderfolgend wenigstens einem Walzgerüst zuführbaren, in einem Vorwalzgerüst gewalzten Vorbändern. Dabei werden einander zugewandte Verbindungsseiten der gewalzten Vorbänder durch Vibrationsreibschweißen gleichzeitig stoffschlüssig mit zwei parallel zwischen den Verbindungsseiten angeordneten metallischen Zwischenstücken verbunden, indem die Zwischenstücke parallel zu den Verbindungsseiten schwingend bewegt werden.

Eine Aufgabe der Erfindung ist es, das Verbinden von Warmbrammen unter geringerem Energiebedarf und geringerem konstruktiven Aufwand und mit einem besseren Verbindungsergebnis zu ermöglichen.

Diese Aufgabe wird durch die unabhängigen Patentansprüche 1, 2, 6 und 7 gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in verschiedener technisch sinnvoller Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Verfahrens können dabei Ausgestaltungen der Vorrichtung entsprechen, und umgekehrt, selbst wenn im Folgenden hierauf im Einzelfall nicht explizit hingewiesen wird.

Gemäß einem ersten erfindungsgemäßen Verfahren zum Verbinden von aufeinanderfolgend wenigstens einem Walzgerüst zuführbaren Warmbrammen werden einander zugewandte Verbindungsseiten der Warmbrammen durch Pendelreib- und/oder Vibrationsreibschweißen gleichzeitig stoffschlüssig mit einem einzigen zwischen den Verbindungsseiten angeordneten metallischen Zwischenstück verbunden, indem das Zwischenstück zumindest weitgehend parallel zu den Verbindungsseiten schwingend bewegt wird, während die Verbindungsseiten gegen das Zwischenstück gepresst und ortsfest gehalten werden, wobei das einzige Zwischenstück entweder vorab von einer der Warmbrammen abgetrennt wird oder als das einzige Zwischenstück ein vorhandenes Brammenreststück verwendet wird.

Nach einem zweiten erfindungsgemäßen Verfahren werden die Warmbrammen gleichzeitig stoffschlüssig mit jeweils wenigstens einem separaten zwischen den Verbindungsseiten angeordneten metallischen Zwischenstück verbunden, indem die in Reihe zwischen den Verbindungsseiten angeordneten Zwischenstücke gegeneinandergepresst und zumindest weitgehend parallel zu den Verbindungsseiten zueinander gegenläufig schwingend bewegt werden, während die Verbindungsseiten gegen die Zwischenstücke gepresst und ortsfest gehalten werden.

Erfindungsgemäß werden die Verbindungsseiten bzw. stirnseitigen Verbindungsflächen der Warmbrammen durch Pendelreib- und/oder Vibrationsreibschweißen mittelbar über ein, zwei oder mehr Zwischenstücke miteinander verbunden. Hierbei werden die Warmbrammen ortsfest gehalten. Es wird allein das einzige Zwischenstück bzw. es werden allein die separaten Zwischenstücke schwingend bewegt. Da das Zwischenstück bzw. die Zwischenstücke eine erheblich geringere Masse, beispielsweise um ein Vielfaches geringere Masse, als eine der Warmbrammen aufweist bzw. aufweisen, kann das Verbinden der Warmbrammen unter geringerem Energiebedarf und geringerem konstruktiven Aufwand erfolgen, da beispielsweise im Vergleich zu JP 03 129 042 B2 geringere Massen bewegt werden müssen. Hierdurch wird die Herstellung der Warmbrammen kosteneffektiver und kann unter Verwendung einer Vorrichtung realisiert werden, die weniger Bauraum benötigt, also kompakter ausgebildet ist. Auch ist das erfindungsgemäße Verfahren prozesstechnisch einfacher zu realisieren.

Im Gegensatz zu einer direkten Reibverschweißung von Warmbrammen, können gemäß der Erfindung beim Pendelreib- und/oder Vibrationsreibschweißen die jeweilig miteinander zu verschweißenden ebenen Verbindungsseiten der Warmbrammen und des Zwischenstücks bzw. der Zwischenstücke zumindest weitgehend oder exakt parallel zueinander bewegt werden, was mit einem gleichmäßigen Kontakt zwischen den Verbindungsseiten und dadurch mit einem besseren, insbesondere gleichmäßigeren, Schweißergebnis bzw. Verbindungsergebnis einhergeht. Unter dem Pendelreibreibschweißen ist ein Schweißvorgang zu verstehen, bei dem das einzige Zwischenstück bzw. die separaten Zwischenstücke jeweils auf einer Kurvenbahn mit großem Radius oszillierend, also pendelnd, bewegt wird bzw. werden, wodurch die schwingende Bewegung des jeweiligen Zwischenstücks erzeugt wird. Der Radius ist so groß gewählt, dass von einer annähernd parallelen Bewegung gesprochen werden kann. Somit versteht es sich, dass der verwendete Ausdruck "weitgehend parallel" auch eine geringfügige Kurvenbahn umfassen kann, die sich aus einer Pendelbewegung ergibt. Unter dem Vibrationsreibschweißen ist ein Schweißvorgang zu verstehen, bei dem das einzige Zwischenstück bzw. die separaten Zwischenstücke linear vor und zurück bewegt wird bzw. werden, wodurch die schwingende Bewegung des jeweiligen Zwischenstücks erzeugt wird.

Gemäß dem erfindungsgemäßen Verfahren werden die einander zugewandten Verbindungsseiten der Warmbrammen durch Pendelreib- und/oder Vibrationsreibschweißen gleichzeitig stoffschlüssig mit dem einzigen Zwischenstück bzw. den separaten Zwischenstücken verbunden. Es ist also ein erfindungsgemäßes Merkmal, dass das jeweilige Zwischenstück nicht zunächst mit der einen Warmbramme und anschließend mit der anderen Warmbramme bzw. dem anderen Zwischenstück verbunden wird. Hierdurch kann das Verbinden der Warmbrammen relativ schnell durchgeführt werden.

Beim Verbinden der Warmbrammen über das einzige Zwischenstück werden gleichzeitig zwei zumindest weitgehend parallel zueinander verlaufende Reibschweißverbindungen auf kleinster Bandlänge erzeugt. Hingegen werden beim Verbinden der Warmbrammen über zwei oder mehrere separate Zwischenstücke gleichzeitig drei oder mehr zumindest weitgehend parallel zueinander verlaufende Reibschweißverbindungen auf kleinster Bandlänge erzeugt, wobei wenigstens eine der Reibschweißverbindungen zwischen den separaten Zwischenstücken ausgebildet wird.

Die Verwendung der wenigstens zwei separaten Zwischenstücke zum Verbinden der Warmbrammen hat den Vorteil, dass sich die Massen bzw. Massenträgheitsmomente der während des Pendelreib- bzw. Vibrationsreibschweißens gegenläufig zueinander schwingenden Zwischenstücke sich gegenseitig ausgleichen bzw. einander aufheben, so dass nach außen keine Schwingungen auftreten. Hierdurch kann der konstruktive Aufwand zur Realisierung des erfindungsgemäßen Verfahrens zusätzlich deutlich reduziert werden.

Die gemäß dem erfindungsgemäßen Verfahren miteinander verbundenen Warmbrammen können aufeinanderfolgend wenigstens einem Walzgerüst oder einer mehrgerüstigen Walzstraße zugeführt werden. Hierdurch wird ein kontinuierlicher Betrieb des Walzgerüsts bzw. der Walzstraße gewährleistet, insbesondere da keine Walzunterbrechungen für das Einfädeln und Ausfädeln einzelner Warmbrammen in das Walzgerüst bzw. in die Walzstraße erforderlich sind. Hierdurch wird die Produktivität des Walzgerüsts bzw. der Walzstraße bzw. einer damit ausgestatteten metallurgischen Anlage, beispielsweise einer Endlosanlage, Kontianlage, CSP-Anlage ("Compact Strip Production") oder dergleichen, erhöht und die technisch erreichbare minimale Enddicke verringert. Die Warmbrammen können dieselbe chemische Zusammensetzung oder unterschiedliche chemische Zusammensetzungen aufweisen.

Die Warmbrammen können insbesondere Dünnbrammen sein, die im nicht gewalzten Zustand eine Dicke etwa ≤ 70 mm aufweisen können. Die Warmbrammen können auch als Warmband oder Vorband bezeichnet werden. Die Erfindung ist allerdings nicht auf das Verbinden von Warmbrammen beschränkt, sondern kann gleichermaßen auch zum Verbinden von warmen metallischen Gießprodukten, wie beispielsweise Knüppeln oder dergleichen, verwendet werden. Der Einfachheit halber werden alle diese warmen metallischen Produkte im Rahmen der Anmeldung als Warmbrammen bezeichnet, ohne dass dies einschränkend zu verstehen ist.

Gemäß der Erfindung wird wenigstens eines der separater Zwischenstücke vorab von einer der Warmbrammen abgetrennt. Hierdurch weist das jeweilige Zwischenstück dieselbe chemische Zusammensetzung wie die Warmbramme auf, von der es abgetrennt worden ist. Das Abtrennen des Zwischenstücks kann mittels einer Schere erfolgen, die bei einer metallurgischen Anlage ohnehin an einer geeigneten Stelle vorhanden ist. Das Zwischenstück kann so von einem Ende der Warmbramme abgetrennt und dann direkt als Zwischenstück zum mittelbaren Verbinden der Warmbramme mit einer nachlaufenden oder vorauslaufenden Warmbramme verwendet werden. Das Zwischenstück muss also nicht vorab gelagert und herantransportiert werden. Die separaten Zwischenstücke können von einer Warmbramme abgetrennt werden. Alternativ können die separaten Zwischenstücke von unterschiedlichen Warmbrammen abgetrennt werden, die mittelbar miteinander zu verbinden sind.

Eine weitere Ausgestaltung gemäß der Erfindung sieht vor, dass als wenigstens eines der separaten Zwischenstücke ein vorhandenes Brammenreststück verwendet wird. Dies macht eine Nutzung von ansonsten ungenutzten Reststücken möglich, was den Materialausschuss bzw. die Ausschussentsorgung reduziert. Auch ist es möglich, ein Zwischenstück unter verschiedenen Reststücken auszuwählen, mit dem eine optimale Verbindung von Warmbrammen mit unterschiedlicher chemischer Zusammensetzung herstellbar ist, mit dem also eine Mischverbindung herstellbar ist.

Nach einer weiteren vorteilhaften Ausgestaltung wird eine Zusammensetzung des einzigen Zwischenstücks bzw. von wenigstens einem der separaten Zwischenstücke derart ausgewählt, dass die Zusammensetzung einer Zusammensetzung der Warmbrammen entspricht oder sich von der Zusammensetzung wenigstens einer Warmbramme unterscheidet. Durch eine unterschiedliche chemische Zusammensetzung des jeweiligen Zwischenstücks und der damit zu verschweißenden Warmbramme können beispielsweise Mischverbindungen zwischen Brammen mit unterschiedlichen chemischen Zusammensetzungen hergestellt werden. Hierbei kann sich die chemische Zusammensetzung des jeweiligen Zwischenstücks auch von den unterschiedlichen chemischen Zusammensetzungen der Warmbrammen unterscheiden. Es können sich auch die chemischen Zusammensetzungen der separaten Zwischenstücke voneinander unterscheiden.

Eine erfindungsgemäße Vorrichtung zum Verbinden von aufeinanderfolgend wenigstens einem Walzgerüst zuführbaren Warmbrammen umfasst wenigstens eine Halteeinrichtung zum Halten einer ersten Warmbramme und einer zweiten Warmbramme, so dass Verbindungsseiten der Warmbrammen einander zugewandt und beabstandet voneinander angeordnet sind, und wenigstens eine Schwingungseinrichtung zum Halten eines einzigen vorab von einer der Warmbrammen abgetrennten oder durch ein vorhandenes Brammenreststück gebildeten metallischen Zwischenstücks zwischen den Verbindungsseiten und zum Erzeugen einer schwingenden Bewegung des Zwischenstücks zumindest weitgehend parallel zu den Verbindungsseiten, wobei die Halteeinrichtung ausgelegt ist, die Verbindungsseiten zumindest während der schwingenden Bewegung des Zwischenstücks gegen das Zwischenstück zu pressen.

Mit der Vorrichtung sind die oben mit Bezug auf das erfindungsgemäße Verfahren genannten Vorteile entsprechend verbunden. Insbesondere kann die Vorrichtung zur Durchführung des Verfahrens gemäß einer der oben genannten Ausgestaltungen oder einer beliebigen Kombination von wenigstens zwei dieser Ausgestaltungen miteinander verwendet werden. Die Halteeinrichtung kann beispielsweise für jede Warmbramme eine eigene Niederhalteeinrichtung aufweisen, mit der ein Endabschnitt der jeweiligen Warmbramme gegen einen Rollgang gepresst werden kann, um die Warmbramme ortsfest zu halten. Die Schwingungseinrichtung umfasst mechanische Mittel zum Festhalten des einzigen Zwischenstücks und wenigstens eine Antriebseinheit zum Erzeugen der schwingenden Bewegung dieser mechanischen Mittel bzw. des damit gehaltenen Zwischenstücks.

Eine weitere erfindungsgemäße Vorrichtung zum Verbinden von aufeinanderfolgend wenigstens einem Walzgerüst zuführbaren Warmbrammen umfasst wenigstens eine Halteeinrichtung zum Halten einer ersten Warmbramme und einer zweiten Warmbramme, so dass Verbindungsseiten der Warmbrammen einander zugewandt und beabstandet voneinander angeordnet sind, und wenigstens eine Schwingungseinrichtung zum Halten von wenigstens zwei separaten metallischen Zwischenstücken in körperlichem Kontakt miteinander und in Reihe zwischen den Verbindungsseiten und zum Erzeugen von gegenläufig schwingenden Bewegungen der Zwischenstücke zumindest weitgehend parallel zu den Verbindungsseiten, wobei die Halteeinrichtung ausgelegt ist, die Verbindungsseiten zumindest während der schwingenden Bewegungen der Zwischenstücke gegen die Zwischenstücke zu pressen.

Mit der Vorrichtung sind die oben mit Bezug auf das erfindungsgemäße Verfahren genannten Vorteile entsprechend verbunden. Insbesondere kann die Vorrichtung zur Durchführung des Verfahrens gemäß einer der oben genannten Ausgestaltungen oder einer beliebigen Kombination von wenigstens zwei dieser Ausgestaltungen miteinander verwendet werden. Die Halteeinrichtung kann beispielsweise für jede Warmbramme eine eigene Niederhalteeinrichtung aufweisen, mit der ein Endabschnitt der jeweiligen Warmbramme gegen einen Rollgang gepresst werden kann, um die Warmbramme ortsfest zu halten. Die Schwingungseinrichtung umfasst mechanische Mittel zum jeweiligen Festhalten der separaten Zwischenstücke und wenigstens eine Antriebseinheit zum Erzeugen der schwingenden Bewegung dieser mechanischen Mittel bzw. der damit gehaltenen Zwischenstücke.

Im Folgenden wird die Erfindung unter Bezugnahme auf die anliegenden Figuren anhand bevorzugter Ausführungsformen beispielhaft erläutert, wobei die nachfolgend erläuterten Merkmale sowohl jeweils für sich genommen als auch in unterschiedlicher technisch sinnvoller Kombination von wenigstens zwei dieser Merkmale miteinander einen vorteilhaften oder weiterbildenden Aspekt der Erfindung darstellen können. Es zeigen:
- Figur 1:: eine schematische Darstellung eines Ausführungsbeispiels für eine erfindungsgemäße Vorrichtung; und
- Figur 2:: eine schematische Darstellung eines weiteren Ausführungsbeispiels für eine erfindungsgemäße Vorrichtung.

In den Figuren sind gleiche bzw. funktionsgleiche Bauteile mit denselben Bezugszeichen versehen. Eine wiederholte Beschreibung dieser Bauteile kann weggelassen sein.

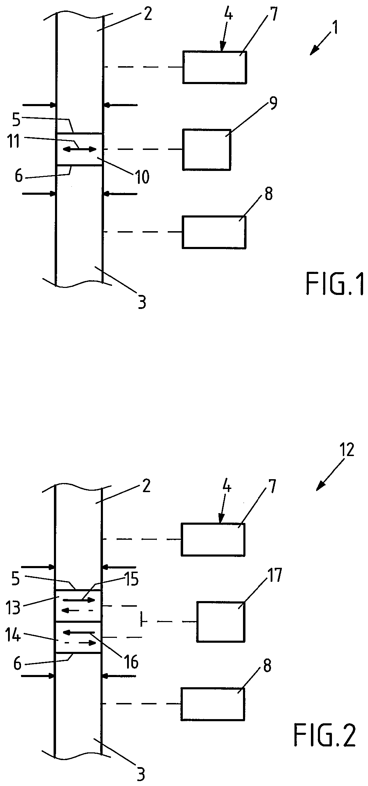

Figur 1 zeigt eine schematische Darstellung eines Ausführungsbeispiels für eine erfindungsgemäße Vorrichtung 1 zum Verbinden von aufeinanderfolgend wenigstens einem nicht gezeigten Walzgerüst zuführbaren Warmbrammen 2 und 3.

Die Vorrichtung 1 umfasst eine Halteeinrichtung 4 zum Halten einer ersten Warmbramme 2 und einer zweiten Warmbramme 3, so dass Verbindungsseiten 5 und 6 der Warmbrammen 2 und 3 einander zugewandt und beabstandet voneinander angeordnet sind. Hierzu umfasst die Halteeinrichtung 4 für jede Warmbramme 2 bzw. 3 eine eigene Halteeinheit 7 bzw. 8.

Des Weiteren umfasst die Vorrichtung 1 eine Schwingungseinrichtung 9 zum Halten eines einzigen metallischen Zwischenstücks 10 zwischen den Verbindungsseiten 5 und 6 und zum Erzeugen einer durch den Doppelpfeil 11 angedeuteten schwingenden Bewegung des Zwischenstücks 10 weitgehend oder exakt parallel zu den Verbindungsseiten 5 und 6. Dabei ist die Halteeinrichtung 4 ausgelegt, die Verbindungsseiten 5 und 6 zumindest während der schwingenden Bewegung des Zwischenstücks 10 gegen das Zwischenstück 10 zu pressen.

Das Zwischenstück 10 kann vorab von einer der Warmbrammen 2 bzw. 3 abgetrennt worden sein. Alternativ kann das Zwischenstück 10 ein bereits vorhandenes Brammenreststück sein. Eine Zusammensetzung des Zwischenstücks 10 kann derart ausgewählt sein, dass die Zusammensetzung einer Zusammensetzung der Warmbrammen 2 und 3 entspricht oder sich von der Zusammensetzung wenigstens einer Warmbramme 2 bzw. 3 unterscheidet.

Figur 2 zeigt eine schematische Darstellung eines weiteren Ausführungsbeispiels für eine erfindungsgemäße Vorrichtung 12 zum Verbinden von aufeinanderfolgend wenigstens einem nicht gezeigten Walzgerüst zuführbaren Warmbrammen 2 und 3.

Die Vorrichtung 12 unterscheidet sich dadurch von dem in Figur 1 gezeigten Ausführungsbeispiel, dass die Vorrichtung 12 eine Schwingungseinrichtung 17 zum Halten von zwei separaten metallischen Zwischenstücken 13 und 14 in körperlichem Kontakt miteinander und in Reihe zwischen den Verbindungsseiten 5 und 6 und zum Erzeugen von gegenläufig schwingenden Bewegungen der Zwischenstücke 13 und 14 weitgehend oder exakt parallel zu den Verbindungsseiten 5 und 6 aufweist, wie es durch die Pfeilkombinationen 15 und 16 angedeutet ist. Durch die gegenläufig schwingende Bewegung heben sich die Vibrationsbelastungen an den Halteeinrichtungen 7 und 8 sowie an der Schwingungseinrichtung 17 auf. Die Halteeinrichtung 4 ist ausgelegt, die Verbindungsseiten 5 und 6 zumindest während der schwingenden Bewegungen der Zwischenstücke 13 und 14 gegen die Zwischenstücke 13 und 14 zu pressen.

### Bezugszeichenliste

1 Vorrichtung
2 Warmbramme
3 Warmbramme
4 Halteeinrichtung
5 Verbindungsseite von 2
6 Verbindungsseite von 3
7 Halteeinheit von 4
8 Halteeinheit von 4
9 Schwingungseinrichtung
10 Zwischenstück
11 Doppelpfeil (Bewegung von 10)
12 Vorrichtung
13 Zwischenstück
14 Zwischenstück
15 Pfeilkombination (schwingende Bewegung von 13)
16 Pfeilkombination (schwingende Bewegung von 14)
17 Schwingungseinrichtung

## Patentansprüche

1. Verfahren zum Verbinden von aufeinanderfolgend wenigstens einem Walzgerüst zuführbaren Warmbrammen (2, 3), **dadurch gekennzeichnet, dass** einander zugewandte Verbindungsseiten (5, 6) der Warmbrammen (2, 3) durch Pendelreib- und/oder Vibrationsreibschweißen gleichzeitig stoffschlüssig mit einem einzigen zwischen den Verbindungsseiten (5, 6) angeordneten metallischen Zwischenstück (10) verbunden werden, indem das Zwischenstück (10) zumindest weitgehend parallel zu den Verbindungsseiten (5, 6) schwingend bewegt wird, während die Verbindungsseiten (5, 6) gegen das Zwischenstück (10) gepresst und ortsfest gehalten werden, wobei das einzige Zwischenstück (10) entweder vorab von einer der Warmbrammen (2, 3) abgetrennt wird oder als das einzige Zwischenstück (10) ein vorhandenes Brammenreststück verwendet wird.

2. Verfahren zum Verbinden von aufeinanderfolgend wenigstens einem Walzgerüst zuführbaren Warmbrammen (2, 3), **dadurch gekennzeichnet, dass** einander zugewandte Verbindungsseiten (5, 6) der Warmbrammen (2, 3) durch Pendelreib- und/oder Vibrationsreibschweißen gleichzeitig stoffschlüssig mit jeweils wenigstens einem separaten zwischen den Verbindungsseiten (5, 6) angeordneten metallischen Zwischenstück (13, 14) verbunden werden, indem die in Reihe zwischen den Verbindungsseiten (5, 6) angeordneten Zwischenstücke (13, 14) gegeneinander gepresst und zumindest weitgehend parallel zu den Verbindungsseiten (5, 6) zueinander gegenläufig schwingend bewegt werden, während die Verbindungsseiten (5, 6) gegen die Zwischenstücke (13, 14) gepresst und ortsfest gehalten werden.

3. Verfahren nach Anspruch 2, **dadurch gekennzeichnet, dass** wenigstens eines der separaten Zwischenstücke (13, 14) vorab von einer der Warmbrammen (2, 3) abgetrennt wird.

4. Verfahren nach Anspruch 2, **dadurch gekennzeichnet, dass** als wenigstens eines der separaten Zwischenstücke (13, 14) ein vorhandenes Brammenreststück verwendet wird.

5. Verfahren nach einem der Ansprüche 1 bis 4, **dadurch gekennzeichnet, dass** eine Zusammensetzung des einzigen Zwischenstücks (10) bzw. von wenigstens einem der separaten Zwischenstücke (13, 14) derart ausgewählt wird, dass die Zusammensetzung einer Zusammensetzung der Warmbrammen (2, 3) entspricht oder sich von der Zusammensetzung wenigstens einer Warmbramme (2, 3) unterscheidet.

6. Vorrichtung (1) zum Verbinden von aufeinanderfolgend wenigstens einem Walzgerüst zuführbaren Warmbrammen (2, 3), umfassend
- wenigstens eine Halteeinrichtung (4) zum Halten einer ersten Warmbramme (2, 3) und einer zweiten Warmbramme (2, 3), so dass Verbindungsseiten (5, 6) der Warmbrammen (2, 3) einander zugewandt und beabstandet voneinander angeordnet sind, und **gekennzeichnet durch**
- wenigstens eine Schwingungseinrichtung (9) zum Halten eines einzigen vorab von einer der Warmbrammen (2, 3) abgetrennten oder durch ein vorhandenes Brammenreststück gebildeten metallischen Zwischenstücks (10) zwischen den Verbindungsseiten (5, 6) und zum Erzeugen einer schwingenden Bewegung des Zwischenstücks (10) zumindest weitgehend parallel zu den Verbindungsseiten (5, 6),
- wobei die Halteeinrichtung (4) ausgelegt ist, die Verbindungsseiten (5, 6) zumindest während der schwingenden Bewegung des Zwischenstücks (10) gegen das Zwischenstück (10) zu pressen.

7. Vorrichtung (12) zum Verbinden von aufeinanderfolgend wenigstens einem Walzgerüst zuführbaren Warmbrammen (2, 3), umfassend
- wenigstens eine Halteeinrichtung (4) zum Halten einer ersten Warmbramme (2, 3) und einer zweiten Warmbramme (2, 3), so dass Verbindungsseiten (5, 6) der Warmbrammen (2, 3) einander zugewandt und beabstandet voneinander angeordnet sind, und **gekennzeichnet durch**
- wenigstens eine Schwingungseinrichtung (17) zum Halten von wenigstens zwei separaten metallischen Zwischenstücken (13, 14) in körperlichem Kontakt miteinander und in Reihe zwischen den Verbindungsseiten (5, 6) und zum Erzeugen von gegenläufig schwingenden Bewegungen der Zwischenstücke (13, 14) zumindest weitgehend parallel zu den Verbindungsseiten (5, 6),
- wobei die Halteeinrichtung (4) ausgelegt ist, die Verbindungsseiten (5, 6) zumindest während der schwingenden Bewegungen der Zwischenstücke (13, 14) gegen die Zwischenstücke (13, 14) zu pressen.

## Claims

1. Method of connecting hot slabs (2, 3) feedable in succession to at least one roll stand, **characterised in that** mutually facing connection sides (5, 6) of the hot slabs (2. 3) are connected by oscillation friction welding and/or vibration friction welding with simultaneous material couple with a single metallic intermediate member (10), which is arranged between the connection sides (5, 6), **in that** the intermediate member (10) is moved in oscillation at least largely parallel to the connection sides (5, 6) whilst the connection sides (5, 6) are pressed against the intermediate member (10) and kept stationary, wherein either the single intermediate member (10) is separated beforehand from one of the hot slabs (2, 3) or an existing residual piece of slab is used as the single intermediate member (10).

2. Method of connecting hot slabs (2, 3) feedable in succession to at least one roll stand, **characterised in that** mutually facing connection sides (5, 6) of the hot slabs (2. 3) are connected by oscillation friction welding and/or vibration friction welding with simultaneous material couple with at least one respective metallic intermediate member (13, 14), which is arranged between the connection sides (5, 6), **in that** the intermediate members (13, 14) arranged in series between the connection sides (5, 6) are pressed against one another and moved in oscillation oppositely with respect to one another at least largely parallel to the connection sides (5, 6) whilst the connection sides (5, 6) are pressed against the intermediate members (13, 14) and kept stationary.

3. Method according to claim 2, **characterised in that** at least one of the separate intermediate members (13, 14) is separated beforehand from one of the hot slabs (2, 3).

4. Method according to claim 2, **characterised in that** an existing residual piece of slab is used as at least one of the separate intermediate members (13, 14).

5. Method according to any one of claims 1 to 4, **characterised in that** a composition of the single intermediate member (10) or of at least one of the separate intermediate members (13, 14) is so selected that the composition corresponds with a composition of the hot slabs (2, 3) or differs from the composition of at least one hot slab (2, 3).

6. Device (1) for connecting hot slabs (2, 3) feedable in succession to at least one roll stand, comprising
- at least one holding device (4) for holding a first hot slab (2, 3) and a second hot slab (2, 3) so that connection sides (5, 6) of the hot slabs (2, 3) are arranged to face one another and are spaced from one another,
**characterised by**
- at least one oscillation device (9) for holding a single metallic intermediate member (10), which is separated beforehand from one of the hot slabs (2, 3) or is formed by an existing residual piece of slab, between the connection sides (5, 6) and for producing an oscillatory movement of the intermediate member (10) at least largely parallel to the connection sides (5, 6),
- wherein the holding device (4) is configured to press the connection sides (5, 6) against the intermediate member (10) at least during the oscillatory movement of the intermediate member (10).

7. Device (12) for connecting hot slabs (2, 3) feedable in succession to at least one roll stand, comprising
- at least one holding device (4) for holding a first hot slab (2, 3) and a second hot slab (2, 3) so that connection sides (5, 6) of the hot slabs (2, 3) are arranged to face one another and are spaced from one another,
**characterised by**
- at least one oscillation device (9) for holding at least two separate metallic intermediate members (13, 14) in physical contact with one another and in series between the connection sides (5, 6) and for producing opposite oscillatory movements of the intermediate members (13, 14) at least largely parallel to the connection sides (5, 6),
- wherein the holding device (4) is configured to press the connection sides (5, 6) against the intermediate members (13, 14) at least during the oscillatory movements of the intermediate members (13, 14).

## Revendications

1. Procédé destiné à relier des brames chaudes (2, 3) qui peuvent être acheminées de manière successive à au moins une cage de laminage, **caractérisé en ce que** l'on relie des côtés de liaison (5, 6) des brames chaudes (2, 3) tournés l'un vers l'autre en recourant à un soudage par friction en faisant appel à des oscillations et/ou à un soudage par friction en faisant appel à des vibrations, de manière simultanée, par adhérence, à une pièce intercalaire métallique individuelle (10) qui est disposée entre les côtés de liaison (5, 6), par le fait que l'on soumet la pièce intercalaire (10) à un mouvement d'oscillation au moins dans une large mesure parallèlement aux côtés de liaison (5, 6), tandis que l'on maintient les côtés de liaison (5, 6) à l'état stationnaire et à l'état comprimé contre la pièce intercalaire (10) ; dans lequel soit on sépare au préalable la pièce intercalaire individuelle (10) par rapport à une des brames chaudes (2, 3), soit on utilise à titre de pièce intercalaire individuelle (10) un morceau résiduel de brame mis à disposition.

2. Procédé destiné à relier des brames chaudes (2, 3) qui peuvent être acheminées de manière successive à au moins une cage de laminage, **caractérisé en ce que** l'on relie des côtés de liaison (5, 6) des brames chaudes (2, 3) tournés l'un vers l'autre en recourant à un soudage par friction en faisant appel à des oscillations et/ou à un soudage par friction en faisant appel à des vibrations, de manière simultanée, par adhérence, à respectivement au moins une pièce intercalaire métallique séparée (13, 14) qui est disposée entre les côtés de liaison (5, 6), par le fait que l'on soumet les pièces intercalaires (13, 14) disposées en ligne entre les côtés de liaison (5, 6) à une compression réciproque et à un mouvement d'oscillation dans des sens contraires l'une par rapport à l'autre au moins dans une large mesure parallèlement aux côtés de liaison (5, 6), tandis que l'on maintient les côtés de liaison (5, 6) à l'état stationnaire et à l'état comprimé contre les pièces intercalaires (13, 14).

3. Procédé selon la revendication 2, **caractérisé en ce que** l'on sépare au préalable au moins une des pièces intercalaires séparées (13, 14) par rapport à une des brames chaudes (2, 3).

4. Procédé selon la revendication 2, **caractérisé en ce que** l'on utilise à titre d'au moins une des pièces intercalaires séparées (13, 14), un morceau résiduel de brame mis à disposition.

5. Procédé selon l'une quelconque des revendications 1 à 4, **caractérisé en ce que** l'on sélectionne une composition de la pièce intercalaire individuelle (10), respectivement d'au moins une des pièces intercalaires séparées (13, 14), d'une manière telle que la composition correspond à une composition des brames chaudes (2, 3) ou se différencie de la composition d'au moins une brames chaudes (2, 3).

6. Dispositif (1) destiné à relier des brames chaudes (2, 3) qui peuvent être acheminées de manière successive à au moins une cage de laminage, qui comprend :
- au moins un mécanisme de maintien (4) qui est destiné à maintenir une première brame chaude (2, 3) et une deuxième brame chaude (2, 3) d'une manière telle que des côtés de liaison (5, 6) des brames chaudes (2, 3) sont disposés en étant orientés l'un vers l'autre et à distance l'un de l'autre, **caractérisé par**
- au moins un mécanisme de mise en oscillation (9) destiné à maintenir une pièce intercalaire métallique individuelle (10), séparée au préalable par rapport à une des brames chaudes (2, 3) ou formée par un morceau résiduel de brame mis à disposition, entre les côtés de liaison (5, 6), et destiné à générer un mouvement d'oscillation (10) de la pièce intercalaire (10) au moins dans une large mesure parallèlement aux côtés de liaison (5, 6) ;
- dans lequel le mécanisme de maintien (4) est conçu pour comprimer les côtés de liaison (5, 6) au moins au cours du mouvement d'oscillation de la pièce intercalaire (10), contre la pièce intercalaire (10).

7. Dispositif (1) destiné à relier des brames chaudes (2, 3) qui peuvent être acheminées de manière successive à au moins une cage de laminage, qui comprend :
- au moins un mécanisme de maintien (4) qui est destiné à maintenir une première brame chaude (2, 3) et une deuxième brame chaude (2, 3) d'une manière telle que des côtés de liaison (5, 6) des brames chaudes (2, 3) sont disposés en étant orientés l'un vers l'autre et à distance l'un de l'autre, **caractérisé par**
- au moins un mécanisme de mise en oscillation (17) destiné à maintenir au moins deux pièces intercalaires métalliques séparées (13, 14) en contact matériel l'une avec l'autre et en ligne entre les côtés de liaison (5, 6), et destiné à générer des mouvements d'oscillation des pièces intercalaires (13, 14) dans des sens contraires au moins dans une large mesure parallèlement aux côtés de liaison (5, 6) ;
- dans lequel le mécanisme de maintien (4) est conçu pour comprimer les côtés de liaison (5, 6) au moins au cours du mouvement d'oscillation des pièces intercalaires (13, 14), contre les pièces intercalaires (13, 14).
